(19) Europäisches Patentamt
European Patent Office
Office européen des brevets

(11) **EP 4 328 653 A1**

(12) **EUROPEAN PATENT APPLICATION**
published in accordance with Art. 153(4) EPC

(43) Date of publication:
**28.02.2024 Bulletin 2024/09**

(21) Application number: **22803784.2**

(22) Date of filing: **05.05.2022**

(51) International Patent Classification (IPC):
***G02B 27/01*** *(2006.01)*

(52) Cooperative Patent Classification (CPC):
**G02B 27/01; G03B 21/20**

(86) International application number:
**PCT/CN2022/090934**

(87) International publication number:
**WO 2022/242460 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2021 CN 202110552755**

(71) Applicant: **Huawei Technologies Co., Ltd.**
**Longgang**
**Shenzhen, Guangdong 518129 (CN)**

(72) Inventors:
• **LIU, Juan**
 **Beijing 100081 (CN)**
• **XU, Liangfa**
 **Beijing 100081 (CN)**
• **LV, Zhenlv**
 **Beijing 100081 (CN)**
• **QIU, Botong**
 **Shenzhen, Guangdong 518129 (CN)**

(74) Representative: **Thun, Clemens**
 **Mitscherlich PartmbB**
 **Patent- und Rechtsanwälte**
 **Karlstraße 7**
 **80333 München (DE)**

(54) **PROJECTION SYSTEM, AUGMENTED REALITY GLASSES, VEHICLE AND TERMINAL**

(57) A projection system is provided, and includes: a phase compensation apparatus (101), configured to perform first phase compensation and chromatic aberration correction on a light ray of a received image, and reflect an output light ray of the image to a holographic combiner (102); and the holographic combiner (102), configured to perform second phase compensation on the light ray that is of the image and that is output by the phase compensation apparatus (101). The phase compensation apparatus (101) is utilized to correct at least one of the following aberrations: astigmatism, a spherical aberration, and a coma aberration; and further correct another aberration in combination with the holographic combiner (102), thereby effectively eliminating aberrations and improving imaging quality. The projection system is used in a head-up display system, an augmented reality display system, a head-mounted display device, and the like.

200

FIG. 2

EP 4 328 653 A1

## Description

This application claims priority to Chinese Patent Application No. 202110552755.2, filed with the China National Intellectual Property Administration on May 20, 2021 and entitled "PROJECTION SYSTEM, AUGMENTED REALITY GLASSES, VEHICLE, AND TERMINAL", which is incorporated herein by reference in its entirety.

## TECHNICAL FIELD

This application relates to the optics field, and more specifically, to a projection system, augmented reality glasses, a vehicle, and a terminal.

## BACKGROUND

A holographic optical element, as a light and thin optical component with high diffraction efficiency, has a good prospect for application; therefore, a holographic display system has emerged. Compared with a conventional display system, the holographic display system uses holographic optical elements, which have good wavelength selectivity and angle selectivity, and high diffraction efficiency; therefore, the system obtains light and thin high-quality display, which is highly bright and free of double images.

Currently, the holographic display system still has a series of aberration problems which affect imaging quality, such as astigmatism, chromatic aberration, spherical aberration, coma aberration, distortion, and color offset. Currently, there is not yet an effective method for solving the aberration problems in the holographic display system.

## SUMMARY

Therefore, this application provides a projection system, augmented reality glasses, a vehicle, and a terminal, to help reduce a size of a projection system to occupy relatively small space, and to effectively improve imaging quality of an image.

According to a first aspect, a projection system is provided and includes: a phase compensation apparatus and a holographic combiner. The phase compensation apparatus is configured to perform first phase compensation and chromatic aberration correction on a light ray of a received image, and reflect an output light ray of the image to the holographic combiner. The holographic combiner is configured to perform second phase compensation on the light ray that is of the image and that is output by the phase compensation apparatus, and deflect the light ray of the image that has undergone second phase compensation into a human eye, so that the light ray of the image becomes an enlarged image. In the projection system according to embodiments of this application, after performing the first phase compensation and the chromatic aberration correction, the phase compensation apparatus reflects an optical path to the holographic combiner; and then the holographic combiner performs second phase compensation on the light ray that is of the image and that is output by the phase compensation apparatus. In embodiments of this application, an optical path becomes smaller through optical path folding, so that a size of the system is relatively small. In addition, the projection system in embodiments of this application is simple to produce, and imaging quality of an image is good.

Optionally, the holographic combiner is further configured to enlarge the light ray of the image. An enlargement function of the system is mainly undertaken by the holographic combiner 102. Therefore, an aperture of an optical element before the holographic combiner is relatively small. The phase compensation apparatus 101 is introduced to perform compensation, an aperture of an optical element that needs to be fabricated is relatively small, and implementation is relatively simple.

In a possible implementation, that the holographic combiner is configured to perform second phase compensation on the light ray that is of the image and that is output by the phase compensation apparatus includes: performing compensation on astigmatism of the light ray that is of the image and that is output by the phase compensation apparatus. In a possible implementation, that the phase compensation apparatus is configured to perform first phase compensation on the light ray of the image includes: performing compensation on a spherical aberration and a coma aberration of the light ray of the image. In this way, a phase compensation function of the holographic combiner 102 may work together with the phase compensation apparatus 101, to perform compensation on the aberrations, thereby reducing complexity and a size of the phase compensation apparatus 101, effectively eliminating the aberrations, and improving imaging quality.

In a possible implementation, the holographic combiner is fabricated by adding a spatial light modulator and/or a free-form curved mirror and performing holographic exposure.

In a possible implementation, there is an included angle between a central projection light ray outgoing from the holographic combiner and a normal direction of the holographic combiner, where the central projection light ray is a projection light ray in a direction of a connection line between the center of the human eye and the center of the holographic combiner.

In a possible implementation, the projection system is used in an in-vehicle head-up display system. The holographic combiner is attached to a windshield (for example, an inner surface of the windshield) of a vehicle, or is sandwiched in the windshield. The phase compensation apparatus is disposed at a central console of the vehicle. The manner of attaching the holographic combiner to a windshield of a vehicle is quite simple. The manner of sandwiching the holographic combiner in the windshield (for example, laminated glass) makes the holographic combiner free from damage or corrosion resulting from changes of the external environment, and therefore reliability is relatively high.

Optionally, the projection system further includes an image source, configured to send the light ray of the image to the phase compensation apparatus; a value range of a cumulative optical path $d_0$ from the image source to the holographic combiner is from 200 millimeters to 600 millimeters; and a value range of a focal length $f_{HOEX}$ of the holographic combiner in a first direction is from 202.70 millimeters to 681.82 millimeters, and a value range of a focal length $f_{HOEY}$ of the holographic combiner in a second direction is from 200.31 millimeters to 679.03 millimeters. The first direction is a horizontal direction, and the second direction is a vertical direction.

It can be understood that the foregoing value ranges are examples for description, and do not constitute any limitation on embodiments of this application.

In a possible implementation, a central projection light ray outgoing from the holographic combiner is parallel to a normal direction of the holographic combiner. It can be understood that in real-world application, "parallel" may be understood as being approximately parallel.

Optionally, the projection system is used in augmented reality AR glasses; the holographic combiner is disposed at a lens; and the phase compensation apparatus is disposed in a leg of the AR glasses.

Optionally, the projection system further includes an image source, configured to send the light ray of the image to the phase compensation apparatus; a value range of a cumulative optical path $d_0$ from the image source to the holographic combiner is from 30 millimeters to 65 millimeters; and a value range of a focal length $f_{HOEX}$ of the holographic combiner in a first direction is from 30.36 millimeters to 2191.01 millimeters, and a value range of a focal length $f_{HOEY}$ of the holographic combiner in a second direction is from 30.18 millimeters to 69.52 millimeters.

It can be understood that the foregoing value ranges are examples for description, and do not constitute any limitation on embodiments of this application.

In a possible implementation, the phase compensation apparatus includes a reflective holographic optical element. Therefore, a chromatic aberration of the system may be corrected, by introducing the reflective holographic optical element, within a wavelength linewidth of the projection light ray which is less than 10 nanometers.

Optionally, the phase compensation apparatus further includes at least one free-form curved mirror, in addition to the foregoing reflective holographic optical element. Therefore, by introducing the reflective holographic optical element and the at least one free-form curved mirror (for example, a free-form curved reflector), a chromatic aberration of the system may be corrected within a wavelength linewidth of the projection light ray which is less than 10 nanometers.

In a possible implementation, the phase compensation apparatus includes at least one free-form curved mirror. Optionally, a tri-color wavelength linewidth of the light ray of the image received by the phase compensation apparatus is less than 3 nanometers. Therefore, by introducing the at least one free-form curved mirror (for example, a free-form curved lens), a chromatic aberration of the system may be corrected within a wavelength linewidth of the projection light ray which is less than 3 nanometers.

In a possible implementation, the image source is further configured to perform distortion preprocessing on the light ray of the image.

The distortion preprocessing can effectively eliminate distortion of the image, thereby reducing aberrations caused by the distortion and improving imaging quality.

In a possible implementation, the projection system further includes an image source, and the image source is further configured to perform color-offset preprocessing on the light ray of the image. In this application, color-offset preprocessing is added at the image source, and a color offset aberration is corrected within an eye box by using an eye tracking technology, so that imaging points of monochromatic components overlap after imaging, thereby reducing aberrations.

In a possible implementation, the phase compensation apparatus further includes a planar reflector.

In a possible implementation, the phase compensation apparatus in embodiments of this application may include one or more combinations of reflective phase compensation elements, so as to provide a greater degree of freedom for aberration optimization design and easily achieve a desirable aberration correction effect.

According to a second aspect, augmented reality glasses are provided, including any one of the projection systems that can be used in the augmented reality glasses according to the first aspect.

According to a third aspect, a vehicle is provided, including any one of the projection systems that can be used in the vehicle according to the first aspect.

According to a fourth aspect, a terminal is provided, including the projection system according to any one of the implementations of the first aspect.

According to a fifth aspect, a projection method is provided. The method includes: performing first phase compensation and chromatic aberration correction on a light ray of a received image, and reflecting an output light ray of the image to a holographic combiner; and performing second phase compensation on the light ray that is of the image and that is output by a phase compensation apparatus, and deflecting the light ray of the image that has undergone the second phase compensation into a human eye, so that the light ray of the image becomes an enlarged image.

**BRIEF DESCRIPTION OF DRAWINGS**

FIG. 1 is a schematic diagram of a cause for astigmatism;
FIG. 2 is a schematic block diagram of a projection system 200 according to an embodiment of this application;
FIG. 3 shows an example in which a projection system according to an embodiment of this application is used in an in-vehicle head-up display system;
FIG. 4 is a diagram showing an example of parameters for a projection system used in an in-vehicle head-up display system according to an embodiment of this application;
FIG. 5 is a diagram showing an example of a combination of phase compensation elements;
FIG. 6 is another diagram showing an example of a combination of phase compensation elements;
FIG. 7 is a diagram showing an example in which a projection system according to an embodiment of this application is used in AR glasses;
FIG. 8 is another diagram showing an example in which a projection system according to an embodiment of this application is used in AR glasses;
FIG. 9 is a diagram showing an example of parameters for a projection system used in AR glasses according to an embodiment of this application;
FIG. 10 is a diagram showing an example of a combination of phase compensation elements;
FIG. 11 is a diagram showing a simulation effect according to an embodiment of this application;
FIG. 12 is a diagram showing a simulation effect after distortion preprocessing;
FIG. 13 is a diagram showing an example of a process of obtaining a color preprocessing offset according to an embodiment of this application;
FIG. 14 is a schematic diagram of a method for obtaining a color preprocessing offset according to an embodiment of this application; and
FIG. 15 is a comparison diagram showing an effect of color-offset preprocessing.

**DESCRIPTION OF EMBODIMENTS**

The following describes technical solutions of this application with reference to the accompanying drawings.

The technical solutions in embodiments of this application may be applied to various augmented reality (augmented reality, AR) projection display systems and transparent projection display systems, for example, a head-up display (head-up display, HUD) system, a head-mounted display (head-mounted display, HMD) (for example, AR glasses) device, and showcase/vehicle window projection display. It can be understood that the head-up display system includes but is not limited to in-vehicle/aerospace/shipboard head-up display.

For ease of understanding, some concepts or terms involved in this application are first briefly described.

Aberrations in a holographic projection display system affect imaging quality. Image astigmatism and a chromatic aberration are one of main sources of aberrations in a holographic projection display system.

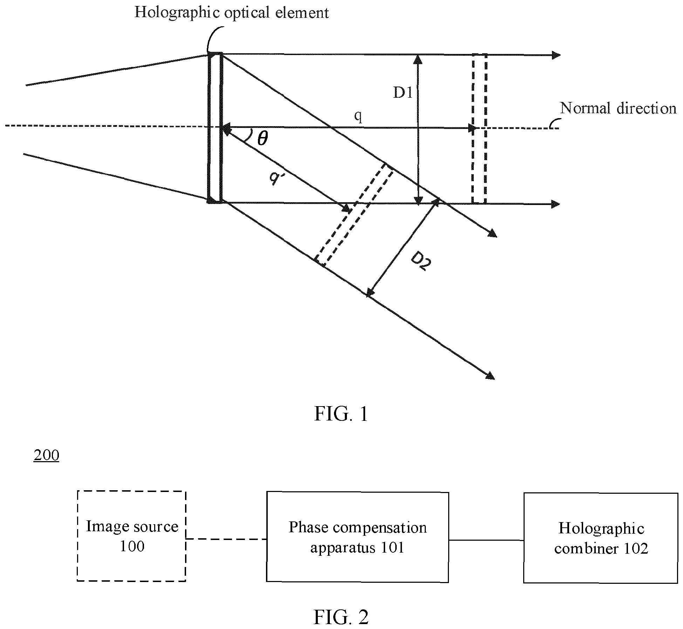

A cause why image astigmatism is generated is as follows: a holographic combiner is used as a beam deflector; and to avoid overlapping between a diffracted image and a reflected image, a diffraction angle and an incident angle are non-coaxially designed. As a result, a beam aperture of an outgoing beam in a horizontal direction and that in a vertical direction are inconsistent, thereby generating astigmatism. For ease of understanding, the cause why astigmatism is generated is described herein with reference to FIG. 1. As shown in FIG. 1, an included angle between a normal direction of a holographic optical element and an output direction of a light ray is $\theta$, an aperture of a coaxial horizontal outgoing beam is $D_1$, and an aperture of an off-axis inclined outgoing beam is $D_2$. Therefore, there is a relational expression between $D_1$ and $D_2$: $D_2 = D_1 \cos \theta$. Due to a change in the beam apertures, an actual imaging distance $q'$ deviates from a coaxial imaging distance $q$. There is a relational expression between the actual imaging distance and the coaxial imaging distance: $q' = q. \cos^2\theta$.

A cause why a chromatic aberration is generated is as follows: optical elements have different optical responses to light having different wavelengths, which is known as a dispersion effect. When a projection light source has a specific linewidth, an aberration occurs.

In addition, aberrations of a holographic projection display system may further include a spherical aberration, a coma aberration and distortion.

A primary aberration (including a spherical aberration, a coma aberration, and astigmatism) of a holographic combiner may be expressed by using the following formula:

$$W = -\frac{(x^2 + y^2)^2}{8}S + \frac{x^2 + y^2}{2}(C_x x + C_y y) + \frac{1}{2}(A_x x^2 - 2A_{xy} xy + A_y y^2)$$

In the formula, x and y are horizontal and vertical coordinates of a point on a wavefront. In the foregoing formula, the first item $-\frac{(x^2+y^2)^2}{8}S$ is a spherical aberration, and $S$ is a spherical aberration coefficient; the second item $\frac{x^2+y^2}{2}(C_x x + C_y y)$ is a coma aberration, and C is a coma aberration coefficient; and the third item $\frac{1}{2}(A_x x^2 - 2A_{xy} xy + A_y y^2)$ is astigmatism, and A is an astigmatism coefficient. Expressions of the coefficients are as follows:

$$S = \frac{1}{l_c^3} - \frac{1}{l_I^3} + \left(\frac{1}{l_O^3} - \frac{1}{l_R^3}\right)$$

$$C_x = \frac{x_c}{l_c^3} - \frac{x_I}{l_I^3} + \left(\frac{x_O}{l_O^3} - \frac{x_R}{l_R^3}\right)$$

$$C_y = \frac{y_c}{l_c^3} - \frac{y_I}{l_I^3} + \left(\frac{y_O}{l_O^3} - \frac{y_R}{l_R^3}\right)$$

$$A_x = \frac{x_c^2}{l_c^3} - \frac{x_I^2}{l_I^3} + \left(\frac{x_O^2}{l_O^3} - \frac{x_R^2}{l_R^3}\right)$$

$$A_{xy} = \frac{x_c y_c}{l_c^3} - \frac{x_I y_I}{l_I^3} + \left(\frac{x_O y_O}{l_O^3} - \frac{x_R y_R}{l_R^3}\right)$$

$$A_y = \frac{y_c^2}{l_c^3} - \frac{y_I^2}{l_I^3} + \left(\frac{y_O^2}{l_O^3} - \frac{y_R^2}{l_R^3}\right)$$

where x and y are coordinates of a corresponding object point or image point on an xy plane, and *l* is a distance between the corresponding object point or image point and the origin of the coordinates (where a corner mark *o* represents object light during exposure recording, a corner mark *R* represents reference light during exposure recording, and a corner mark *I* represents image light during reproduction, and a corner mark *c* represents reproduced light during reproduction). A coordinate system is defined in a way in which the xy plane and the holographic combiner are on a same plane. The coordinate origin is located at the center of the holographic combiner.

For unified description herein, in the formulas (including the foregoing formulas and the following formulas) in embodiments of this application, an error tolerance on the left side and the right side of an equal sign in each equation is ±15%.

A cause why distortion is generated is as follows: when the holographic combiner is used as an imaging element to enlarge an image, an edge of the image is distorted.

This application provides a projection system, in which a phase compensation apparatus is introduced to eliminate an aberration problem caused by astigmatism and a chromatic aberration, thereby helping improve imaging quality of a holographic projection display system.

The following describes a projection system according to embodiments of this application with reference to FIG. 2 to FIG. 15.

FIG. 2 is a schematic block diagram of a projection system 200 according to an embodiment of this application. As shown in FIG. 2, the projection system 200 includes a phase compensation apparatus 101 and a holographic combiner (holographic combiner) 102.

The phase compensation apparatus 101 is configured to perform first phase compensation and chromatic aberration correction on a light ray of a received image, and reflect an output light ray of the image to the holographic combiner 102.

The holographic combiner 102 is configured to perform second phase compensation on the light ray that is of the image and that is output by the phase compensation apparatus 101, and deflect the light ray of the image that has undergone the second phase compensation into a human eye, so that the light ray of the image becomes an enlarged image. For example, the light ray of the image forms an upright enlarged virtual image at the human eye.

The holographic combiner 102 is transparent to light beyond a designed response angle or light outside a response wavelength (or in other words, the holographic combiner 102 has a high transmittance for light that does not meet a designed projection angle or a projection wavelength), so that the human eye can further observe, while observing the image, an external real scenario by using the holographic combiner, and the two are superimposed to enhance a display effect.

In the projection system according to this embodiment of this application, after performing the first phase compensation and the chromatic aberration correction, the phase compensation apparatus reflects an optical path to the holographic combiner; and then the holographic combiner performs second phase compensation on the light ray that is of the image and that is output by the phase compensation apparatus. In this embodiment of this application, an optical path becomes smaller through optical path folding, so that a size of the system is relatively small. In addition, the projection system in this application is easy to produce, and imaging quality of an image is relatively good.

In this embodiment of this application, the phase compensation apparatus 101 is added to the projection system, and the phase compensation apparatus 101 is utilized to correct at least one of the following aberrations: astigmatism, a spherical aberration, and a coma aberration; and further corrects another aberration in combination with the holographic combiner 102, thereby effectively eliminating aberrations and improving imaging quality.

For example, the phase compensation apparatus 101 performs phase compensation on the astigmatism, and the holographic combiner 102 performs phase compensation on the spherical aberration and the coma aberration.

For another example, the phase compensation apparatus 101 performs phase compensation on the spherical aberration and the coma aberration, and the holographic combiner 102 performs phase compensation on the astigmatism. An enlargement function of the system is mainly undertaken by the holographic combiner 102. Therefore, an aperture of an optical element before the holographic combiner 102 is small. In this way, the phase compensation apparatus 101 is introduced to perform compensation, an aperture of an optical element that needs to be fabricated is relatively small, and implementation is relatively simple. In addition, a phase compensation function of the holographic combiner 102 may work together with the phase compensation apparatus 101, to perform compensation on the aberrations, thereby reducing complexity and a size of the phase compensation apparatus 101.

It is to be understood that a name of the holographic combiner 102 does not constitute any limitation on embodiments of this application. The holographic combiner 102 may also be understood as a holographic apparatus having functions of the holographic combiner 102.

A source of the image received by the phase compensation apparatus 101 is not limited in this embodiment of this application. The projection system may include an image source, or may not include an image source. In a case in which the projection system does not include an image source, the image received by the phase compensation apparatus may come from an external device (for example, a terminal device), provided that the image can be sent to the projection system.

It is to be understood that a manner in which the phase compensation apparatus 101 receives the image is not limited in this embodiment of this application. For example, the image received by the phase compensation apparatus 101 may be a light ray of an image sent by an external device, which arrives at the phase compensation apparatus 101 after being projected and/or emitted.

Optionally, the projection system further includes an image source 100. The image source 100 is configured to generate an image, where a light ray of the image is projected to the phase compensation apparatus 101. It can be understood that a specific form of the image source 100 is not limited in this embodiment of this application. The image source 100 may be a selfluminous integrated flat panel display, or may be a display module with a scattering screen. For example, the image source 100 may be any one of the following: a light emitting diode (light emitting diode, LED), a micro-light emitting diode (Micro-LED), an organic light emitting diode (organic light emitting diode, OLED), a liquid crystal display (liquid crystal display, LCD), a digital micro-mirror device (digital micro-mirror device, DMD), and a micro-electro-mechanical system (micro-electro-mechanical system, MEMS). Optionally, a narrow-linewidth LED or a laser light source may be selected as the image source 100.

To correct the astigmatism, the phase compensation apparatus 101 may perform first phase compensation in a single direction or in a plurality of directions, so that an imaging distance of the holographic combiner 102 in a first direction is the same as an imaging distance of the holographic combiner 102 in a second direction. For example, the single direction may be a first direction or a second direction. For another example, the plurality of directions may be a first direction and a second direction.

It can be understood that a quantity, a type, or a combination form of phase compensation elements included in the phase compensation apparatus 101 is not limited in this embodiment of this application. For example, the type of the phase compensation elements may include a reflective phase compensation element and/or a transmissive phase compensation element.

The phase compensation apparatus 101 is configured to perform chromatic aberration correction on the light ray of the image, specifically including: the phase compensation apparatus 101 and the holographic combiner 102 have opposite dispersion characteristics, and can implement chromatic aberration correction within a specific range of an RGB tri-color wavelength linewidth of the image source, that is, chromatic aberrations are neutralized between the phase compensation apparatus 101 and the holographic combiner 102. For example, the phase compensation apparatus 101 includes a holographic optical element, and the holographic optical element is configured to implement a function of chromatic aberration correction.

Optionally, the phase compensation apparatus 101 includes a holographic optical element. Optionally, the phase compensation apparatus 101 further includes one or more of the following optical elements: a diffractive optical element and a micro-nano optical element (meta-surface, or a two-dimensional material, or the like). A tri-color wavelength linewidth of an image on which the phase compensation apparatus 101 performs chromatic aberration correction is less than 10 nanometers. In other words, a tri-color wavelength linewidth of the light ray of the image received by the phase compensation apparatus 101 is less than 10 nanometers.

Further, the phase compensation apparatus 101 further includes at least one free-form curved mirror, in addition to the one or more of a diffractive optical element, a holographic optical element, and a micro-nano optical element (a meta-surface, or a two-dimensional material, or the like). In other words, at least one of a diffractive optical element, a holographic optical element, and a micro-nano optical element, and at least one free-form curved mirror may be used together to implement chromatic aberration correction. It can be understood that the free-form curved mirror herein may represent a type of curved mirror. For example, the free-form curved mirror may include a quadratic curved mirror, a cylindrical mirror, a prism, or the like. Alternatively, the free-form curved mirror herein may also represent a kind of curved mirror itself, for example, a free-form curved mirror as understood by a person skilled in the art. Herein, the phase compensation apparatus 101 further includes at least one free-form curved mirror, in addition to the one or more of a diffractive optical element, a holographic optical element, and a micro-nano optical element (a meta-surface, or a two-dimensional material, or the like). In this case, a tri-color wavelength linewidth of an image on which the phase compensation apparatus 101 performs chromatic aberration correction is also less than 10 nanometers. In other words, a tri-color wavelength linewidth of the light ray of the image received by the phase compensation apparatus 101 is also less than 10 nanometers.

For example, the phase compensation apparatus 101 includes a holographic optical element and a free-form curved mirror; the free-form curved mirror (which may be a free-form curved reflector) receives a light ray of an image, and performs first phase compensation on the light ray of the received image; and a light ray reflected by the free-form curved mirror arrives at the holographic optical element, and the holographic optical element performs chromatic aberration correction on the light ray of the image received from the free-form curved mirror.

It can be understood that the phase compensation apparatus 101 herein is merely an example for description, and this application is not limited thereto. For example, positions of the holographic optical element and the free-form curved mirror that are included in the phase compensation apparatus may be interchanged. For another example, the phase compensation apparatus may include a plurality of holographic optical elements and/or free-form curved mirrors.

Alternatively, optionally, the phase compensation apparatus 101 includes at least one free-form curved mirror. The at least one free-form curved mirror receives a light ray of an image, and performs first phase compensation and chromatic aberration correction on the light ray of the image. In other words, chromatic aberration correction may be implemented by using at least one free-form curved mirror. Herein, the free-form curved mirror used to implement chromatic aberration correction is a free-form curved lens. In this case, the phase compensation apparatus further includes a reflector, configured to reflect a light of an image. For a meaning of the free-form curved mirror, refer to the foregoing description. Details are not described herein again. Herein, the phase compensation apparatus 101 does not include a holographic optical element. A tri-color wavelength linewidth of an image on which the phase compensation apparatus 101 performs chromatic aberration correction is less than 3 nanometers. In other words, a tri-color wavelength linewidth of the light ray of the image received by the phase compensation apparatus 101 is less than 3 nanometers.

In a possible implementation, that the holographic combiner 102 is configured to perform second phase compensation on the light ray that is of the image and that is output by the phase compensation apparatus 101 includes:

performing phase compensation on astigmatism of the light ray that is of the image and that is output by the phase compensation apparatus 101; and the phase compensation apparatus 101 is configured to perform phase compensation on a spherical aberration and a coma aberration of the light ray of the image. An imaging distance of the holographic combiner 102 in a first direction is the same as an imaging distance of the holographic combiner 102 in a second direction, and the first direction is orthogonal (or in other words, vertical) to the second direction. In other words, the holographic combiner 102 may correct the astigmatism of the light ray of the image; and the phase compensation apparatus 101 performs first phase compensation and chromatic aberration correction on the spherical aberration and the coma aberration of the light ray of the image, thereby improving imaging quality of the holographic display system.

In this embodiment of this application, the spherical aberration, the coma aberration, and the chromatic aberration of the light ray of the image are corrected by using the phase compensation apparatus 101; and the astigmatism of the light ray of the image may be corrected by using the holographic combiner 102, thereby greatly improving imaging quality of the holographic display system.

Optionally, the holographic combiner 102 is fabricated by adding a spatial light modulator and/or a free-form curved mirror to provide a phase compensation factor and performing holographic exposure. For example, the free-form curved mirror may be a cylindrical mirror. For a meaning of the free-form curved mirror, refer to the foregoing description. Details are not described herein again.

Optionally, the holographic combiner 102 may be a holographic thin film whose thickness does not exceed 1 millimeter, and may be attached to a surface of a transparent substrate in an application scenario or sandwiched in a sandwich material. A person skilled in the art can know that the transparent substrate or the sandwich material is usually glass or transparent plastic that already exists in an application scenario. The human eye can observe an upright enlarged virtual image formed in front of a projection light ray emitted by the holographic combiner 102, and can observe an external real scene through the transparent substrate or the sandwich material. In this way, the real scene is fused with the virtual image, thereby implementing an augmented reality display result.

It is to be understood that a shape of the holographic combiner 102 is not limited in this embodiment of this application. For example, the holographic combiner 102 may be an ellipse, a rectangle, an irregular shape, or a corresponding shape designed based on an application scenario.

In a possible implementation, there is an included angle between a central projection light ray outgoing from the holographic combiner 102 and a normal direction of the holographic combiner 102, where the central projection light ray is a projection light ray in a direction of a connection line between the center of the human eye and the center of the holographic combiner.

The projection system in this embodiment of this application may be used in an in-vehicle head-up display system. Correspondingly, the holographic combiner 102 is attached to a windshield of a vehicle, or sandwiched in the windshield; and the phase compensation apparatus 101 is disposed at a central console of the vehicle. When the holographic combiner 102 is attached to a windshield of a vehicle, the holographic combiner 102 may be attached to an inner surface of the windshield of the vehicle. The manner of attaching the holographic combiner 102 to a windshield of a vehicle is quite simple. The manner of sandwiching the holographic combiner 102 in the windshield (for example, laminated glass) makes the holographic combiner free from damage or corrosion resulting from changes of the external environment, and therefore reliability is relatively high.

Optionally, the image source 100 may be disposed at the central console of the vehicle. It can be understood that, the image source 100 may be an external device, and may be pluggable; or may be an image source in the projection system; or may be an image source in the in-vehicle head-up display system; and is not limited herein. Brightness of a light ray of an image emitted by the image source 100 is adjustable and may be adaptively adjusted along with brightness of an external environment, for example, the light ray becomes bright in the daytime and becomes dark at night.

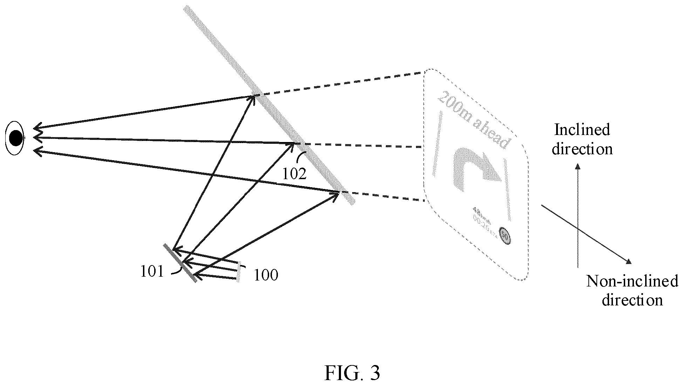

An example shown in FIG. 3 is used herein to describe an example in which a projection system according to an embodiment of this application is used in an in-vehicle head-up display system. As shown in FIG. 3, the image source 100 and the phase compensation apparatus 101 may be disposed inside a central console of a vehicle, and the holographic combiner 102 may be attached to an inner surface of a front windshield of the vehicle or sandwiched in the front windshield. A light ray of an image generated by the image source 100 is reflected by the phase compensation apparatus 101, and then the light ray of the image is projected, by using a transparent opening on a surface of the central console, to the holographic combiner 102. The light ray is diffracted by the holographic combiner 102 and then projected into a human eye, to form an upright enlarged virtual image. In addition, the human eye can see a real scene outside the vehicle through the front windshield. The virtual image is fused with the real scene outside the vehicle, and the two are superimposed to enhance a display effect. For example, the real scenario outside the vehicle includes but is not limited to a lane, a pedestrian/vehicle/traffic indication mark, a navigation indication, and the like.

Locations of the image source 100 and the phase compensation apparatus 101 are not specifically limited in this application. For example, an in-vehicle HUD is used as an example, and the image source 100 and the phase compensation apparatus 101 together may form an HUD optical receiver/transmitter disposed in back space of an inner decorative steering wheel (for example, an internal position of a dashboard of the vehicle). The holographic combiner 102 is attached to an inner surface of a windshield of the vehicle or is sandwiched in the windshield. In the in-vehicle head-up display system, the phase compensation apparatus 101 may perform first phase compensation on the light ray of the image in a first direction and/or a second direction.

In an embodiment, in the in-vehicle head-up display system, the phase compensation apparatus 101 may be configured to perform compensation on a spherical aberration and a coma aberration of the image, and the holographic combiner 102 may be configured to perform compensation on astigmatism of the light ray of the image. Optionally, the projection system further includes an image source 100, where the image source 100 is configured to send the light ray of the image to the phase compensation apparatus 101.

For example, a value range of a cumulative optical path $d_0$ from the image source 100 to the holographic combiner 102 is from 200 millimeters to 600 millimeters; an included angle $\theta$ between a central normal direction of the holographic combiner and a horizontal direction is 10° to 70°; a distance $d_i$ from a virtual image formed by the holographic combiner 102 to the holographic combiner 102 is 5 meters to 15 meters; and a value range of a focal length $f_{HOEX}$ of the holographic combiner in a first direction is from 202.70 millimeters to 681.82 millimeters, and a value range of a focal length $f_{HOEY}$ of the holographic combiner in a second direction is from 200.31 millimeters to 679.03 millimeters. The first direction is the horizontal direction, and the second direction is a vertical direction.

Optionally, $f_{HOEX}$ and $f_{HOEY}$ in the foregoing example respectively meet the following formulas:

$$\frac{1}{f_{HOEX}} = \frac{1}{d_0} - \frac{1}{d_i}$$

$$\frac{1}{f_{HOEY}} = \frac{1}{d_0} - \frac{1}{d_i/cos^2\theta}$$

For the spherical aberration and the coma aberration of the light ray of the image corrected by the phase compensation apparatus 101, optionally, in the in-vehicle head-up display system, a phase compensation factor added to the phase compensation apparatus 101 satisfies the following expression:

$$k\left(-S \times \frac{(p^2x^2 + p^2y^2)^2}{8} + C_x \times px\frac{p^2x^2 + p^2y^2}{2}\right)$$

where $k$ is a light wave vector, S is a spherical aberration coefficient, $x$ is a horizontal coordinate of a point on a wavefront, y is a vertical coordinate of the point on the wavefront, $C_x$ is a coma aberration coefficient, and p is a scaling factor.

Specifically, the phase compensation apparatus 101 may provide the phase compensation factor by using a surface shape and/or a phase cumulative distribution of an optical element of the phase compensation apparatus 101, to perform compensation on the spherical aberration and the coma aberration of the light ray of the image. Different phase compensation factors may be generated by using different optical paths that are generated by designing the surface shape (for example, a free-form curved mirror) of the optical element; or providing the phase compensation factor by using the phase cumulative distribution of the optical element may be implemented by using one or more of the following optical elements: a diffractive optical element, a holographic optical element, and a micro-nano optical element (meta-surface, or a two-dimensional material, or the like).

In an embodiment, in the in-vehicle head-up display system, the phase compensation apparatus 101 may be configured to perform compensation on astigmatism of the light ray of the image, and the holographic combiner 102 may be configured to perform compensation on a spherical aberration and a coma aberration of the light ray of the image. This embodiment is described with reference to the following three manners.

Manner 1: The phase compensation apparatus 101 performs, in a first direction and a second direction, first phase compensation on the light ray of the image, where the phase compensation apparatus 101 has a focal length (or in other words, a focal power) in both the first direction and the second direction, the first direction is a horizontal direction, and the second direction is a vertical direction.

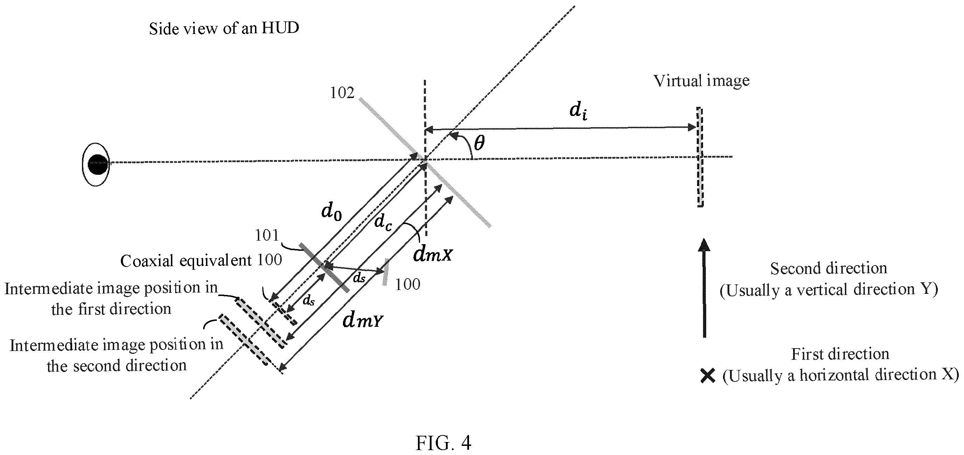

Before a focal length of a phase compensation element in the first direction and/or that in the second direction are/is described, for ease of understanding, parameters defined in the following description are first described with reference to FIG. 4: $d_o$, $d_i$, $d_c$, and $\theta$. FIG. 4 is an example of a side view of an HUD to which a projection system according to this application is applied. As shown in FIG. 4, $d_o$ is a cumulative optical path/distance from the image source 100 to the holographic combiner 102; $d_i$ is a distance from a virtual image formed by the holographic combiner 102 to the holographic combiner 102; $d_c$ is a distance from the phase compensation apparatus 101 to the holographic combiner 102; $\theta$ is an included angle between a central normal direction of the holographic combiner and the first direction; $d_{mX}$

is a distance, in the first direction, between a virtual object (that is, an intermediate image position in the first direction) formed by the phase compensation apparatus 101 for the holographic combiner 102 and the holographic combiner 102; and $d_{mY}$ is a distance, in the second direction, between a virtual object (that is, an intermediate image position in the second direction) formed by the phase compensation apparatus 101 for the holographic combiner 102 and the holographic combiner 102. The first direction is a horizontal direction, and the second direction is a vertical direction. $d_o = ds + d_c$, that is, a cumulative optical path/distance from the image source 100 to the holographic combiner 102, where $ds$ is a distance from the image source 100 (or a coaxial equivalent 100) to the phase compensation apparatus 101. A meaning of the intermediate image position in the first direction is: a position at which an intermediate image is the clearest among images in the first direction. This is because the phase compensation apparatus 101 has a focal power in the first direction, and therefore the clearest of imaging positions in the first direction changes relative to the coaxial equivalent 100. A meaning of the intermediate image position in the second direction is: a position at which an intermediate image is the clearest among images in the second direction. This is because the phase compensation apparatus 101 has a focal power in the second direction, and therefore the clearest of imaging positions in the second direction changes relative to the coaxial equivalent 100. Imaging distances of the holographic combiner 102 in the first direction and the second direction are the same, that is, both are $d_i$. In other words, an image is the clearest at the $d_i$ position in the first direction and an image is the clearest at the $d_i$ position in the second direction, thereby achieving an objective of eliminating astigmatism.

For Manner 1, for example, when a value range of the cumulative optical path/distance $d_o$ from the image source 100 to the holographic combiner 102 is from 250 millimeters to 312.5 millimeters, a value range of the distance $d_c$ from the phase compensation element to the holographic combiner 102 is from 187.5 millimeters to 250 millimeters, and a value of an included angle $\theta$ between a direction of a connection line from the human eye to the center of the holographic combiner 102 and the normal direction of the holographic combiner 102 is 45°, a value range of the focal length $f_{comX}$ of the phase compensation apparatus 101 in the first direction is from -1203.1 millimeters to -350.0 millimeters and a value range of the focal length $f_{comY}$ of the phase compensation apparatus 101 in the second direction is from 450 millimeters to 1296.9 millimeters.

Optionally, $f_{comX}$ in the foregoing example satisfies the following formula:

$$\frac{1}{f_{comX}} = \frac{1}{d_o - d_c} - \frac{1}{d_{mX} - d_c}$$

$f_{comY}$ satisfies the following formula:

$$\frac{1}{f_{comY}} = \frac{1}{d_o - d_c} - \frac{1}{d_{mY} - d_c}$$

$d_{mX}$ satisfies the following formula:

$$\frac{1}{d_{mX}} = \frac{1}{d_i} + \frac{1}{f_{hoe}}$$

$d_{mY}$ satisfies the following formula:

$$\frac{1}{d_{mY}} = \frac{1}{d_i/cos^2\theta} + \frac{1}{f_{hoe}}$$

$f_{hoe}$ satisfies the following formula:

$$\frac{1}{f_{hoe}} = \frac{1}{d_0} - \frac{1}{d_i}$$

Meanings of the parameters in the foregoing formulas are not described herein again.

Manner 2: The phase compensation apparatus 101 performs, in a first direction, first phase compensation on the light ray of the image, so that an imaging distance in the first direction is equal to an imaging distance in a second direction, where the phase compensation apparatus 101 has a focal length (or in other words, a focal power) in the first direction.

The first direction is a horizontal direction, and the second direction is a vertical direction. For example, when a value range of the cumulative optical path/distance $d_o$ from the image source 100 to the holographic combiner 102 is from 250 millimeters to 312.5 millimeters, a value range of the distance $d_c$ from the phase compensation apparatus 101 to the holographic combiner 102 is from 187.5 millimeters to 250 millimeters, and a value of an included angle $\theta$ between a direction of a connection line from the human eye to the center of the holographic combiner and the normal direction of the holographic combiner is 45°, a value range of the focal length $f_{comX}$ of the phase compensation apparatus 101 in the first direction is from -1203.1 millimeters to -350.0 millimeters and the focal length of the phase compensation apparatus 101 in the second direction is infinite.

Optionally, $f_{comX}$ in the foregoing example satisfies the following formula:

$$\frac{1}{f_{comX}} = \frac{1}{d_o - d_c} - \frac{1}{d_{mX} - d_c}$$

$d_{mX}$ satisfies the following formula:

$$\frac{1}{d_{mX}} = \frac{1}{d_i} + \frac{1}{f_{hoe}}$$

$f_{hoe}$ satisfies the following formula:

$$\frac{1}{f_{hoe}} = \frac{1}{d_0} - \frac{1}{d_i / \cos^2\theta}$$

Meanings of the parameters in the foregoing formulas are not described herein again.

Manner 3: The phase compensation apparatus 101 performs, in a second direction, first phase compensation on the light ray of the image, so that an imaging distance in the second direction is equal to an imaging distance in a first direction, where the phase compensation apparatus 101 has a focal length (or in other words, a focal power) in the second direction, the first direction is a horizontal direction, and the second direction is a vertical direction. For example, when a value range of the cumulative optical path/distance $d_o$ from the image source 100 to the holographic combiner 102 is from 250 millimeters to 312.5 millimeters, a value range of the distance $d_c$ from the phase compensation apparatus 101 to the holographic combiner 102 is from 187.5 millimeters to 250 millimeters, and a value of an included angle $\theta$ between a direction of a connection line from the human eye to the center of the holographic combiner and the normal direction of the holographic combiner is 45°, a value range of the focal length $f_{comY}$ of the phase compensation apparatus 101 in the second direction is from 450 millimeters to 1296.9 millimeters and the focal length of the phase compensation apparatus 101 in the first direction is infinite.

Optionally, $f_{comY}$ in the foregoing example satisfies the following formula:

$$\frac{1}{f_{comY}} = \frac{1}{d_o - d_c} - \frac{1}{d_{mY} - d_c}$$

$d_{mY}$ satisfies the following formula:

$$\frac{1}{d_{mY}} = \frac{1}{d_i / \cos^2\theta} + \frac{1}{f_{hoe}}$$

$f_{hoe}$ satisfies the following formula:

$$\frac{1}{f_{hoe}} = \frac{1}{d_0} - \frac{1}{d_i}$$

Meanings of the parameters in the foregoing formulas are not described herein again.

In the foregoing three manners, the phase compensation apparatus 101 includes one phase compensation element, that is, the foregoing function is implemented by using one phase compensation element. However, this application is not limited thereto.

Optionally, in embodiments of this application (including a scenario in which a projection system according to an embodiment of this application is used in an HUD and a scenario in which a projection system according to an embodiment of this application is used in an HMD), the phase compensation apparatus 101 may include one or more combinations of phase compensation elements. One phase compensation element combination may include one or more of a reflective phase compensation element, a transmissive phase compensation element, and a planar reflector. In addition, a quantity of reflective phase compensation elements, a quantity of transmissive phase compensation elements, or a quantity of planar reflectors included in one phase compensation element combination is not specifically limited in this application. For example, one phase compensation element combination includes one phase compensation element (which may be a reflective phase compensation element or a transmissive phase compensation element) and one planar reflector. For another example, one phase compensation element combination includes two phase compensation elements and at least one planar reflector.

Compared with a case in which the phase compensation apparatus 101 includes one phase compensation element, the phase compensation apparatus 101 including one or more combinations of reflective phase compensation elements may provide a greater degree of freedom for aberration optimization design and easily achieve a desirable aberration correction effect, to help reduce difficulty in fabricating the holographic combiner and reduce a size of an optical receiver/transmitter by adding optical path folding of a planar reflector.

The reflective phase compensation element may be a free-form curved reflector, a holographic optical element, a diffractive optical element, or a micro-nano optical element (a meta-surface structure, or a two-dimensional material, or the like). The transmissive phase compensation element may be a cylindrical lens, a free-form curved lens, a holographic optical element, a diffractive optical element, or a micro-nano optical element (meta-surface, or a two-dimensional material, or the like). Phase compensation is implemented through different phase variations accumulated at points on a surface, so as to correct an aberration. The planar reflector may be a wideband dielectric reflector, a metal reflector, a holographic optical element reflector, or the like.

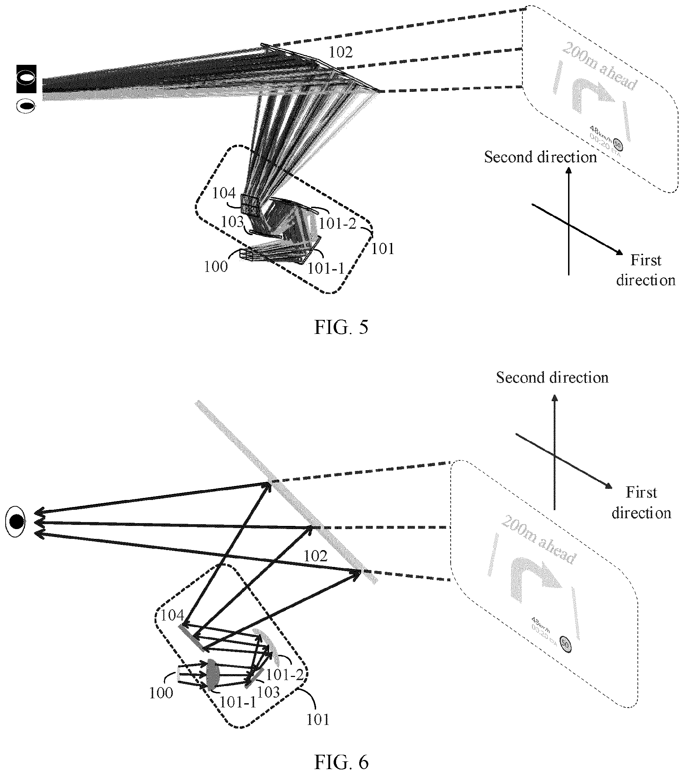

With reference to FIG. 5 and FIG. 6, the following describes possible implementations of a combination of phase compensation elements when a projection system according to an embodiment of this application is used in an HUD.

FIG. 5 is a diagram showing an example of a combination of phase compensation elements. As shown in FIG. 5, a phase compensation apparatus 101 includes reflective phase compensation elements 101-1 and 101-2 and two planar reflectors 103 and 104, where 101-1 and 101-2 are two different free-form curved reflectors, and different phase compensation factors may be generated through different optical paths that are generated by designing surface shapes of the two free-form curved reflectors. In FIG. 5, a light ray of an image generated by the image source 100 is projected to the phase compensation element 101-1. The light ray is reflected by the phase compensation element 101-1 to the phase compensation element 101-2, and then reflected by the planar reflectors 103 and 104 to the holographic combiner 102. A sum of phase compensation factors superposed in the two times of reflection by the phase compensation elements 101-1 and 101-2 may correct an aberration of the holographic combiner. Functions of the planar reflectors 103 and 104 are to implement optical path turn-back, and compress an overall installation size of an optical receiver/transmitter that includes the combination of phase compensation elements and the image source, thereby optimizing an overall size of the optical receiver/transmitter.

FIG. 6 is another diagram showing an example of a combination of phase compensation elements. As shown in FIG. 6, the phase compensation apparatus 101 includes a transmissive phase compensation element 101-1, a planar reflector 103, a reflective phase compensation element 101-2, and a planar reflector 104. For specific optical path directions, refer to the example shown in FIG. 6. Details are not described herein again.

It can be understood that the examples in FIG. 5 and FIG. 6 are merely examples for description, and this application is not limited thereto.

In an implementation, for a case in which the holographic combiner 102 corrects the spherical aberration and the coma aberration of the light ray of the image, optionally, in the in-vehicle head-up display system, a phase compensation factor added to the holographic combiner 102 satisfies the following expression:

$$k\left(-S \times \frac{(x^2+y^2)^2}{8} + C_x \times x\frac{x^2+y^2}{2}\right)$$

where $k$ is a light wave vector, S represents a spherical aberration coefficient, $x$ represents a horizontal coordinate of a point on a wavefront, y represents a vertical coordinate of the point on the wavefront, and $C_x$ represents a coma aberration coefficient.

Specifically, the holographic combiner 102 may be fabricated by adding a spatial light modulator and/or a free-form curved mirror and performing holographic exposure. The phase compensation factor provided by the holographic combiner 102 may be used to perform compensation on the spherical aberration and the comma aberration of the light ray of the image.

For unified description herein, an error tolerance of a value of the phase compensation factor is $\pm 15\%$, and details are not described again where the phase compensation factor appears in the following description.

In another possible implementation, a central projection light ray outgoing from the holographic combiner 102 is parallel to a normal direction of the holographic combiner 102. For a definition of the central projection light ray, refer to the foregoing description. Details are not described herein again. It can be understood that in real-world application, "parallel" may be understood as being approximately parallel.

The projection system in embodiments of this application may be used in an HMD (for example, AR glasses). The following description is provided by using AR glasses as an example. Optionally, the holographic combiner 102 is disposed at a lens. For example, the holographic combiner 102 is attached to a surface (an inner surface or an outer surface) of the lens. It can be understood that the holographic combiner 102 may not be attached to the surface of the lens, and there is a gap between the holographic combiner 102 and the lens. This is not specifically limited herein. For another example, the holographic combiner 102 is sandwiched in the lens; and the phase compensation apparatus 101 is disposed at an image source 100.

In an embodiment, in the AR glasses, the phase compensation apparatus 101 may be configured to perform compensation on a spherical aberration and a coma aberration of the image, and the holographic combiner 102 may be configured to perform compensation on astigmatism of the light ray of the image. Optionally, the projection system further includes an image source 100, where a value range of a cumulative optical path $d_0$ from the image source 100 to the holographic combiner 102 is from 30 millimeters to 65 millimeters, an included angle $\theta$ between a direction of a central projection light ray outgoing from the phase compensation apparatus 101 and a normal direction of the holographic combiner is 45° to 75°, a distance $d_i$ from a virtual image formed by the holographic combiner 102 to the holographic combiner 102 is from 1 meter to 5 meters, a value range of a focal length $f_{HOEX}$ of the holographic combiner 102 in a first direction is from 30.36 millimeters to 2191.01 millimeters, and a value range of a focal length $f_{HOEY}$ of the holographic combiner 102 in a second direction is from 30.18 millimeters to 69.52 millimeters. Optionally, the image source 100 is disposed in a leg of the AR glasses. The first direction is a horizontal direction, and the second direction is a vertical direction.

Optionally, $f_{HOEX}$ and $f_{HOEY}$ in the foregoing example respectively meet the following formulas:

$$\frac{1}{f_{HOEX}} = \frac{1}{d_0} - \frac{1}{d_i/cos^2\theta}$$

$$\frac{1}{f_{HOEY}} = \frac{1}{d_0} - \frac{1}{d_i}$$

The phase compensation apparatus 101 corrects the spherical aberration and the coma aberration of the light ray of the image. Optionally, in the AR glasses, a phase compensation factor added to the phase compensation apparatus 101 satisfies the following expression:

$$k\left[-S\frac{\left(\frac{p^2x^2}{cos^2\theta}+p^2y^2\right)^2}{8} + \frac{\frac{p^2x^2}{cos^2\theta}+p^2y^2}{2}\left(C_xpx/cos\theta + C_ypy\right)\right]$$

where $k$ is a light wave vector, S is a spherical aberration coefficient, $x$ is a horizontal coordinate of a point on a wavefront, y is a vertical coordinate of the point on the wavefront, $C_x$ is a coma aberration coefficient, and p is a scaling factor.

Specifically, the phase compensation apparatus 101 may provide the phase compensation factor by using a surface shape and/or a phase cumulative distribution of an optical element of the phase compensation apparatus 101, to perform compensation on the spherical aberration and the coma aberration of the light ray of the image. For description about the surface shape and the phase cumulative distribution of the optical element, refer to the foregoing description. Details are not described herein again.

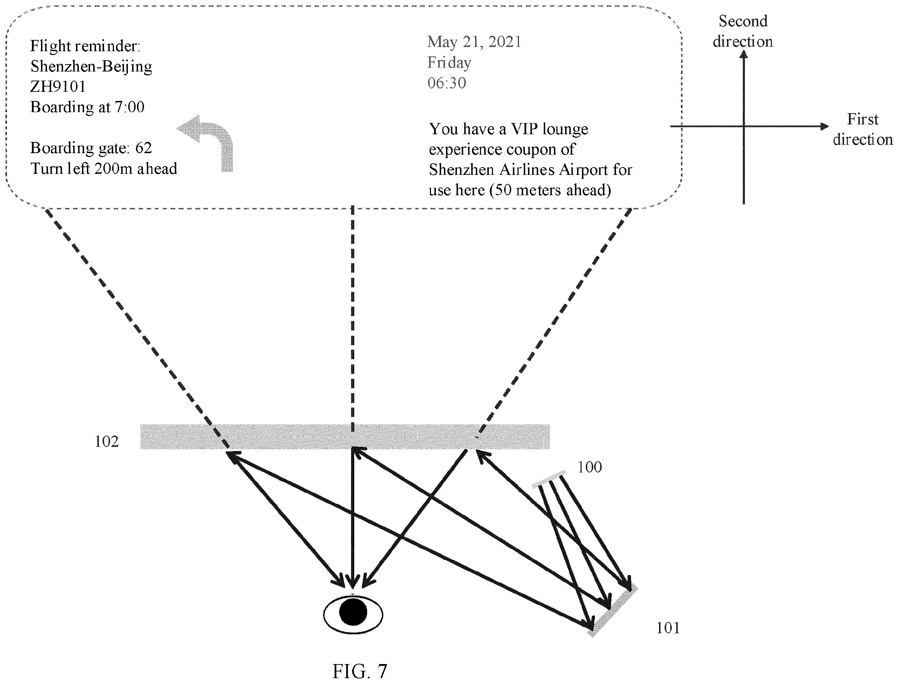

An example shown in FIG. 7 is used herein to describe an example in which a projection system according to an embodiment of this application is used in AR glasses. As shown in FIG. 7, the image source 100 and the phase compensation apparatus 101 are disposed in a leg of the glasses, and the holographic combiner 102 is attached to a surface of a lens of the glasses or is sandwiched in a material of a lens of the glasses. It is to be understood that imaging shown in FIG. 7 is merely an example for description, and does not constitute a limitation on embodiments of this application. For specific optical path directions, refer to the example shown in FIG. 7. Details are not described herein again.

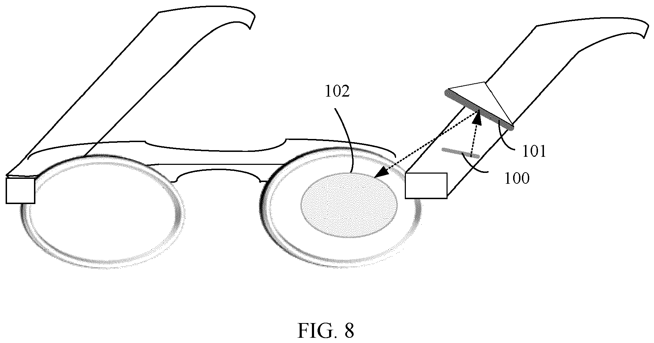

An example shown in FIG. 8 is used herein to describe another example in which a projection system according to an embodiment of this application is used in AR glasses. As shown in FIG. 8, the image source 100 and the phase compensation apparatus 101 are disposed in a leg of the glasses, and the holographic combiner 102 is attached to a surface of a lens of the glasses or is sandwiched in a material of a lens of the glasses. For example, the holographic combiner 102 is an ellipse and may be located in the center of the lens, so that the holographic combiner 102 diffracts a formed image to a human eye. It is to be understood that the structure in FIG. 8 is merely an example for description, and this application is not limited thereto. It needs to be further understood that, dashed lines with arrows in FIG. 8 are examples of optical path directions, and have no special meaning.

In an embodiment, in the AR glasses, the phase compensation apparatus 101 may be configured to perform compensation on astigmatism of the light ray of the image, and the holographic combiner 102 may be configured to perform compensation on a spherical aberration and a coma aberration of the light ray of the image. In the AR glasses, the phase compensation apparatus 101 may perform, in a first direction and/or a direction that is not a second direction, first phase compensation on the light ray of the image. This embodiment is described with reference to the following three manners.

Manner 1: the phase compensation apparatus 101 performs, in the first direction and the second direction, first phase compensation on the light ray of the image, where the phase compensation apparatus 101 has a focal length (or in other words, a focal power) in both the first direction and the second direction.

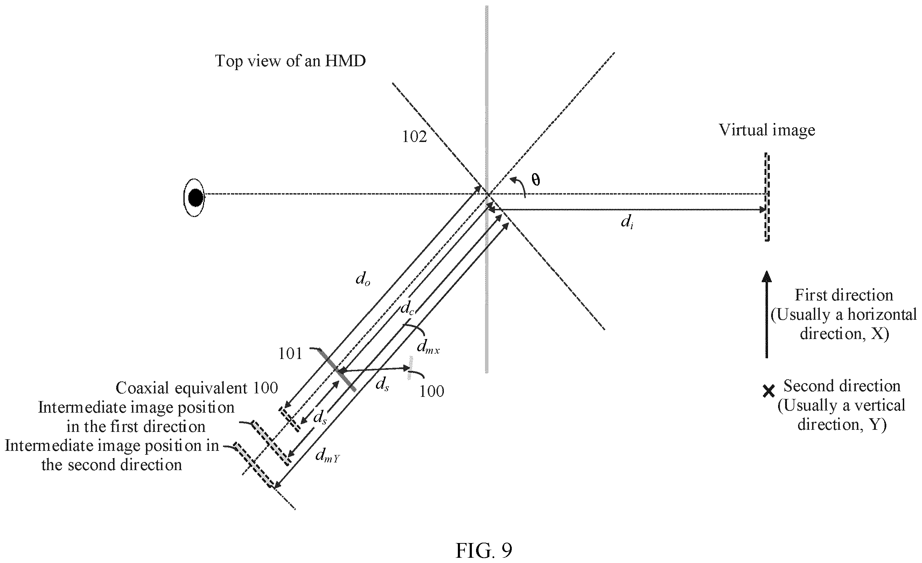

Before a focal length of a phase compensation element in an inclined direction and/or that in a non-inclined direction are/is described, for ease of understanding, parameters defined in the following description are first described with reference to FIG. 9: $d_o$, $d_i$, $d_c$, and $\theta$. FIG. 9 is an example of a top view of an HMD to which a projection system according to this application is applied. As shown in FIG. 9, $d_i$ is a distance from a virtual image formed by the holographic combiner 102 to the holographic combiner 102; $d_c$ is a distance from the phase compensation apparatus 101 to the holographic combiner 102; $\theta$ is an included angle between a direction of a central projection light ray outgoing from the phase compensation apparatus 101 and a normal direction of the holographic combiner 102; $d_{mX}$ is a distance, in the first direction, between a virtual object (that is, an intermediate image position in the first direction) formed by the phase compensation apparatus 101 for the holographic combiner 102 and the holographic combiner 102; and $d_{mY}$ is a distance, in the second direction, between a virtual object (that is, an intermediate image position in the second direction) formed by the phase compensation apparatus 101 for the holographic combiner 102 and the holographic combiner 102. It is to be understood that, dashed lines introduced in FIG. 9 are for ease of denoting distances from the parameters (including $d_o$, $d_i$, $d_{mX}$ and $d_{mY}$) to the center of the holographic combiner 102, and have no special meaning. The first direction is a horizontal direction, and the second direction is a vertical direction. $d_o = ds + d_c$, that is, a cumulative optical path/distance from the image source 100 to the holographic combiner 102, where $ds$ is a distance from the image source 100 (or a coaxial equivalent 100) to the phase compensation apparatus 101. A meaning of the intermediate image position in the first direction is: a position at which an intermediate image is the clearest among images in the first direction. This is because the phase compensation apparatus 101 has a focal power in the first direction, and therefore the clearest of imaging positions in the first direction changes relative to the coaxial equivalent 100. A meaning of the intermediate image position in the second direction is: a position at which an intermediate image is the clearest among images in the second direction. This is because the phase compensation apparatus 101 has a focal power in the second direction, and therefore the clearest of imaging positions in the second direction changes relative to the coaxial equivalent 100. Imaging distances of the holographic combiner 102 in the first direction and the second direction are the same, that is, both are $d_i$. In other words, an image is the clearest at the $d_i$ position in the first direction and an image is the clearest at the $d_i$ position in the second direction, thereby achieving an objective of eliminating astigmatism.

For example, when a value range of the cumulative optical path/distance $d_o$ from the image source 100 to the holographic combiner 102 is from 50 millimeters to 60 millimeters and a value range of the included angle $\theta$ between the central light ray outgoing from the phase compensation apparatus 101 and the normal direction of the holographic combiner is 60°, a value range of the focal length $f_{comX}$ of the phase compensation apparatus 101 in the first direction is from -49.5 millimeters to -9.6 millimeters and a value range of the focal length $f_{comY}$ of the phase compensation apparatus 101 in the second direction is from 32.1 millimeters to 70.5 millimeters. Optionally, $f_{comX}$ in the foregoing example satisfies the following formula:

$$\frac{1}{f_{comX}} = \frac{1}{d_o - d_c} - \frac{1}{d_{mX} - d_c}$$

$f_{comY}$ satisfies the following formula:

$$\frac{1}{f_{comY}} = \frac{1}{d_o - d_c} - \frac{1}{d_{mY} - d_c}$$

$d_{mX}$ satisfies the following formula:

$$\frac{1}{d_{mX}} = \frac{1}{d_i \cos^2 \theta} + \frac{1}{f_{hoe}}$$

$d_{mY}$ satisfies the following formula:

$$\frac{1}{d_{mY}} = \frac{1}{d_i} + \frac{1}{f_{hoe}}$$

$f_{hoe}$ satisfies the following formula:

$$\frac{1}{f_{hoe}} = \frac{1}{d_0} - \frac{1}{d_i}$$

Manner 2: the phase compensation apparatus 101 performs, in the first direction, first phase compensation on the light ray of the image, where the phase compensation apparatus 101 has a focal length (or in other words, a focal power) in the first direction.

For example, when a value range of the cumulative optical path/distance $d_o$ from the image source 100 to the holographic combiner 102 is from 50 millimeters to 60 millimeters and a value of the included angle $\theta$ between the central light ray outgoing from the phase compensation apparatus 101 and the normal direction of the holographic combiner 102 is 60°, a value range of the focal length $f_{comX}$ of the phase compensation apparatus 101 in the first direction is from - 49.5 millimeters to -9.6 millimeters and the focal length of the phase compensation apparatus 102 in the second direction is infinite.

Optionally, $f_{comX}$ in the foregoing example satisfies the following formula:

$$\frac{1}{f_{comX}} = \frac{1}{d_0 - d_c} - \frac{1}{d_{mX} - d_c}$$

$d_{mX}$ satisfies the following formula:

$$\frac{1}{d_{mX}} = \frac{1}{d_i \cos^2 \theta} + \frac{1}{f_{hoe}}$$

$f_{hoe}$ satisfies the following formula:

$$\frac{1}{f_{hoe}} = \frac{1}{d_0} - \frac{1}{d_i}$$

Manner 3: the phase compensation apparatus 101 performs, in the second direction, first phase compensation on the light ray of the image, where the phase compensation apparatus 101 has a focal length (or in other words, a focal power) in the second direction.

For example, when a value range of the cumulative optical path/distance $d_o$ from the image source 100 to the holographic combiner 102 is from 50 millimeters to 60 millimeters and a value of the included angle $\theta$ between the central light ray outgoing from the phase compensation apparatus 101 and the normal direction of the holographic combiner is 60°, a value range of the focal length $f_{comY}$ of the phase compensation apparatus 101 in the second direction is from 32.1 millimeters to 70.5 millimeters and the focal length of the phase compensation apparatus 101 in the first direction is infinite.

Optionally, $f_{comY}$ in the foregoing example satisfies the following formula:

$$\frac{1}{f_{comY}} = \frac{1}{d_0 - d_c} - \frac{1}{d_{mY} - d_c}$$

$d_{mY}$ satisfies the following formula:

$$\frac{1}{d_{mY}} = \frac{1}{d_i} + \frac{1}{f_{hoe}}$$

$f_{hoe}$ satisfies the following formula:

$$\frac{1}{f_{hoe}} = \frac{1}{d_o} - \frac{1}{d_i \cos^2 \theta}$$

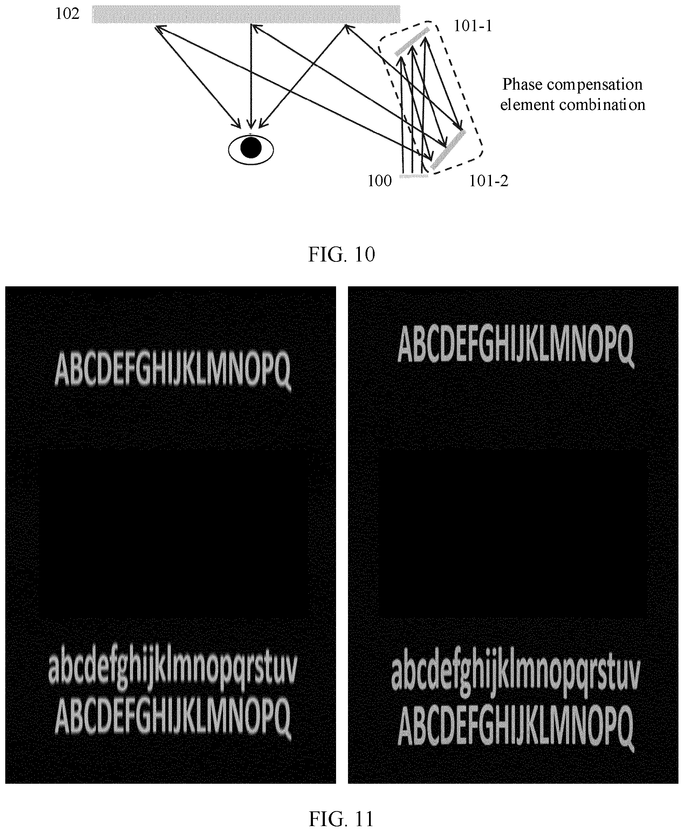

Similarly, in the AR glasses, the phase compensation apparatus 101 may include one or more combinations of phase compensation elements. For specific description about the phase compensation element combinations, refer to the foregoing description. With reference to FIG. 10, the following describes possible implementations of a combination of phase compensation elements when a projection system according to an embodiment of this application is used in AR glasses.

FIG. 10 is a diagram showing an example of a combination of phase compensation elements. As shown in FIG. 10, the phase compensation apparatus 101 (or in other words, a combination of phase compensation elements) includes two reflective phase compensation elements 101-1 and 101-2. For specific optical path directions, refer to the example shown in FIG. 10. Details are not described herein again. Optionally, one of the reflective phase compensation elements may be alternatively replaced with a planar reflector. The planar reflector may be used for optical path turn-back.

In an implementation, for a case in which the holographic combiner 102 corrects the spherical aberration and the coma aberration of the light ray of the image, optionally, in the AR glasses, a phase compensation factor provided by the holographic combiner 102 satisfies the following expression:

$$k\left[ -S\frac{\left(\frac{x^2}{cos^2\theta} + y^2\right)^2}{8} + \frac{\frac{x^2}{cos^2\theta} + y^2}{2}\left(C_x x/cos\theta + C_y y\right) \right]$$

where $k$ is a light wave vector, S represents a spherical aberration coefficient, $x$ represents a horizontal coordinate of a point on a wavefront, y is a vertical coordinate of the point on the wavefront, $C_x$ represents a coma aberration coefficient, and $\theta$ is an included angle between a direction of a central projection light ray outgoing from the phase compensation apparatus 101 and a normal direction of the holographic combiner 102.

Specifically, the holographic combiner 102 may be fabricated by adding a spatial light modulator and/or a free-form curved mirror and performing holographic exposure. The phase compensation factor provided by the holographic combiner 102 may be used to perform compensation on the spherical aberration and the coma aberration.

In consideration of system compactness and installation space, the projection system in this application may not include the phase compensation apparatus 101, but functions of the phase compensation apparatus 101 are transferred to the image source 100 and/or the holographic combiner 102 for implementation. To be specific, the projection system includes the image source 100 and the holographic combiner 102, and the phase compensation apparatus 101 may be omitted. The phase compensation apparatus 101 may be simplified in the following three manners.

Manner 1: all functions of the phase compensation apparatus 101 are integrated into the image source 100. For example, the functions of the phase compensation apparatus 101 are implemented by adding an optical structure, such as a micro-lens array, a transmissive meta-surface, a free-form curved lens, or a holographic optical element, to a surface of the image source 100.

Manner 2: all functions of the phase compensation apparatus 101 are integrated into the holographic combiner 102. In a process of fabricating the holographic combiner 102, a phase correction factor for exposure processing is added by using an optical element.

Manner 3: the functions of the phase compensation apparatus 101 are implemented by the image source 100 and the holographic combiner 102 together. For example, an optical structure (a micro-lens array, a transmissive meta-surface, a free-form curved lens, a holographic optical element, or the like) is added to the image source 100, to correct aberrations such as a spherical aberration, a coma aberration, and a chromatic aberration; and a phase compensation factor for exposure processing is added to a process of fabricating the holographic combiner 102, to correct astigmatism and aberrations. The image source 100 and the holographic combiner 102 together complete aberration correction comprehensively on the spherical aberration, the coma aberration, the chromatic aberration, and the astigmatism. The cooperation between the image source 100 and the holographic combiner 102 reduces a relative complexity requirement on the image source 100 and difficulty in fabricating the holographic combiner 102.

It is to be understood that the simplification of the phase compensation apparatus 101 may be alternatively used in an in-vehicle head-up display system or AR glasses.

FIG. 11 is a diagram showing a simulation effect according to an embodiment of this application. In FIG. 11, a diagram on the left shows an effect of imaging without astigmatism compensation, and a diagram on the right shows an effect of imaging after astigmatism compensation. It can be seen that imaging quality of an image is higher after the astigmatism compensation.

In this embodiment of this application, before reflecting the image to the phase compensation apparatus 101, the image source 100 may further perform distortion preprocessing on the image by using a distortion preprocessing technology, so as to reduce distortion. The distortion preprocessing technology is not limited in this application. For example, an image distortion preprocessing technology based on a feature point may be used to correct the distortion.

The following briefly describes an image distortion preprocessing technology based on a feature point.

A distortion coefficient of the system is obtained by fitting a relationship between coordinates of a reference point of an input image and coordinates of a reference point of an output image. The distortion coefficient may be used to perform distortion preprocessing on an input image in a geometric transformation manner in advance, so that distortion is eliminated for a final output image. The coordinate mapping relationship between an input image and an output image may be fitted by using the following polynomials:

$$\tilde{x} = \hat{s}(x, y) = \sum_{i=0}^{k} \sum_{j=0}^{k=i} u_{ij} x^i y^j$$

$$\tilde{y} = \hat{t}(x, y) = \sum_{i=0}^{k} \sum_{j=0}^{k=i} v_{ij} x^i y^j$$

where (x, y) is a feature coordinate point in a source image of an original image; $(\tilde{x}, \tilde{y})$ is a coordinate point of an image that is output for display after passing through a holographic projection system; $\hat{s}(x, y)$ and $\hat{t}(x, y)$ are mapping relationship functions for fitting $(\tilde{x}, \tilde{y})$ and (x, y); k is an order of fitting data, and a larger k indicates higher fitting precision but higher complexity and a greater computing workload; and $u_{ij}$ and $v_{ij}$ are fitting coefficients of $\hat{s}(x, y)$ and i(x, y). As a quantity of the feature points (x, y) increases, a pre-distortion correction effect is better but a computing workload is greater.

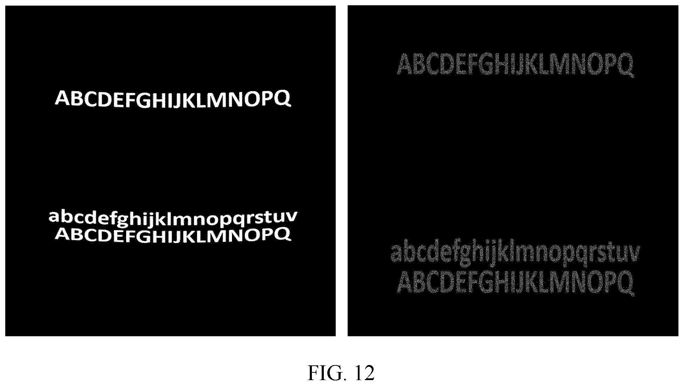

FIG. 12 is a diagram showing a simulation effect after distortion preprocessing. As shown in FIG. 12, a diagram on the left shows an input image for distortion preprocessing, and a diagram on the right shows an effect of imaging after distortion preprocessing. It can be seen that the effect of imaging after distortion preprocessing is better. For a manner of obtaining the input image for distortion preprocessing, refer to existing descriptions. How to obtain the input image for distortion preprocessing is not limited herein.

In embodiments of this application, the astigmatism, coma aberration, spherical aberration, chromatic aberration, and distortion brought by the holographic combiner can be effectively resolved, and imaging quality is significantly improved.

In addition to the foregoing described aberrations, a color offset aberration may also exist in a holographic projection system.

A cause why the color offset aberration is generated is as follows: a holographic optical element (including a holographic combiner) is fabricated by performing exposure using laser of three colors of red (R), green (G), and blue (B). A deviation between tri-color optical paths during exposure and an assembly error of the holographic projection system may introduce a color offset aberration during imaging. In addition, the color offset aberration is related to a position (or in other words, an observation point) of a human eye. The observation point is any observation point within an eye box. For example, a camera device (for example, a CCD camera) may be disposed to record an image seen by an observer. The observation point may be expressed as $(x_i, y_j, z_k)$.

In a possible implementation, the image source 100 is further configured to perform color-offset preprocessing on the light ray of the image, so that an image observed by the human eye has no color offset aberration (or in other words, imaging points of monochromatic components overlap after imaging, to reduce aberrations). In this application, color-offset preprocessing is added to the image source 100 and is combined with an eye tracking technology, to implement correction of a color offset aberration within an eye box. The image source 100 performs color-offset preprocessing on the light ray of the image by using a color preprocessing offset.

The following describes in detail a process in which the image source 100 determines the color preprocessing offset.

First, a feature image (for example, a black-and-white checkerboard image) is input to the image source 100. Then, three monochromatic input images corresponding to the colored feature image are obtained. How to obtain the three monochromatic input images is not limited herein. Optionally, a light filter may be added to the camera device, or to the image source 100, or at any position (that is, a position of the light filter is not specifically limited) on an optical path before entry into the camera device, so as to obtain, through decomposition, the three monochromatic input images (a tri-color narrow-spectrum light source corresponding to the image source 100) corresponding to the colored feature image. Alternatively, the light filter may not be needed, but the three monochromatic images are input separately in three times. Next, the image source 100 adjusts, in each feature area $(x_m, y_n)$, each monochromatic input image; and performs color preprocessing by using a color-offset preprocessing offset. $(x_m, y_n)$ indicates a position of a feature area, where m indicates a row where the feature area is located, and n indicates a column where the feature area is located. A feature area may be understood as a minimum unit grid of an image. For example, a feature area is a cell in a checkerboard. In addition, a colored image observed by a human eye is captured at an observation point, and the captured colored image is compared with a colored feature image obtained through decomposition at the image source 100, to obtain a difference between the two; and then iteration is performed by using a method such as an optimization algorithm, and fitting and adjustment is performed until, after an output image of the image source 100 (where the output image is an image obtained after the image source 100 performs color-offset preprocessing by using the color-offset preprocessing offset) passes through the projection system, an image generated at the observation point is the same as the original feature image (that is, the input feature image). In this case, color preprocessing offsets that are of each feature area and that correspond to the observation point are recorded. The color preprocessing offsets that are of each feature area and that correspond to the observation point are recorded as the following expressions:

$$(\Delta x_{m,n}, \Delta y_{m,n})_{R,i,j,k}, (\Delta x_{m,n}, \Delta y_{m,n})_{G,i,j,k}, (\Delta x_{m,n}, \Delta y_{m,n})_{B,i,j,k}$$

where $(\Delta x_{m,n}, \Delta y_{m,n})_{R,i,j,k}$ represents a color preprocessing offset of each feature area for a red image corresponding to the image seen at the observation point, $(\Delta x_{m,n}, \Delta_{ym,n})_{G,i,j,k}$ represents a color preprocessing offset of each feature area for a green image corresponding to the image seen at the observation point, and $(\Delta x_{m,n}, \Delta y_{m,n})_{B,i,j,k}$ represents a color preprocessing offset of each feature area for a blue image corresponding to the image seen at the observation point.

Then, reversed color preprocessing offsets of each feature area are obtained. There are two manners of obtaining the color preprocessing offsets of each reversed feature area.

Manner 1: Adjustment and fitting of a black-and-white checkerboard is performed only once, and an operation of reversing the feature image is not performed. The following operation is performed on a part of the to-be-determined color preprocessing offsets: a feature offset of a remaining area (for example, a black grid) in a feature image is obtained by interpolation (averaging) of feature offsets of adjacent feature areas (for example, white grids).

For example, it is assumed that offsets $(\Delta x_{m,n}, \Delta y_{m,n})_{R,i,j,k}$, $(\Delta x_{m,n}, \Delta y_{m,n})_{G,i,j,k}$, and $(\Delta x_{m,n}, \Delta y_{m,n})_{B,i,j,k}$ of each white feature area in the black-and-white checkerboard have been obtained. Then offsets of remaining feature areas may be obtained by interpolation of the obtained data. For example, averaging of the obtained data is used as an example, and then specific formulas for computing the offsets of the remaining feature areas are as follows:

$$\Delta x_{p,q,R,i,j,k} = (\Delta x_{p+1,q,R,i,j,k} + \Delta x_{p-1,q,R,i,j,k} + \Delta x_{p,q+1,R,i,j,k} + \Delta x_{p,q-1,R,i,j,k})/4$$

$$\Delta y_{p,q,R,i,j,k} = (\Delta y_{p+1,q,R,i,j,k} + \Delta y_{p-1,q,R,i,j,k} + \Delta y_{p,q+1,R,i,j,k} + \Delta y_{p,q-1,R,i,j,k})/4$$

$$\Delta x_{p,q,G,i,j,k} = (\Delta x_{p+1,q,G,i,j,k} + \Delta x_{p-1,q,G,i,j,k} + \Delta x_{p,q+1,G,i,j,k} + \Delta x_{p,q-1,G,i,j,k})/4$$

$$\Delta y_{p,q,G,i,j,k} = (\Delta y_{p+1,q,G,i,j,k} + \Delta y_{p-1,q,G,i,j,k} + \Delta y_{p,q+1,G,i,j,k} + \Delta y_{p,q-1,G,i,j,k})/4$$

$$\Delta x_{p,q,B,i,j,k} = (\Delta x_{p+1,q,B,i,j,k} + \Delta x_{p-1,q,B,i,j,k} + \Delta x_{p,q+1,B,i,j,k} + \Delta x_{p,q-1,B,i,j,k})/4$$

$$\Delta y_{p,q,B,i,j,k} = (\Delta y_{p+1,q,B,i,j,k} + \Delta y_{p-1,q,B,i,j,k} + \Delta y_{p,q+1,B,i,j,k} + \Delta y_{p,q-1,B,i,j,k})/4$$

It can be understood that, the foregoing specific computing formulas for obtaining the offsets of the remaining feature areas are merely examples for description, and this application is not limited thereto.

Manner 2: The feature image at the image source 100 is reversed. For example, in a black-and-white checkerboard image, a black grid is set to white and a white grid is set to black. For example, each reversed feature area obtained may be denoted as $(x_p, y_q)$, where $p$ represents a row in which the feature area is located, and $q$ represents a column in which the feature area is located.

The foregoing process of obtaining color preprocessing offsets of each feature area may be repeated, to obtain color preprocessing offsets that are of each reversed feature area and that correspond to the observation point. For example, the color preprocessing offsets of each reversed feature area may be denoted as follows:

$$(\Delta x_{p,q}, \Delta y_{p,q})_{R,i,j,k}, (\Delta x_{p,q}, \Delta y_{p,q})_{G,i,j,k}, (\Delta x_{p,q}, \Delta y_{p,q})_{B,i,j,k}$$

where $(\Delta x_{p,q}, \Delta y_{p,q})_{R,i,j,k}$ represents a color preprocessing offset of each feature area for a reversed image of the red image corresponding to the image seen at the observation point, $(\Delta x_{p,q}, \Delta y_{p,q})_{G,i,j,k}$ represents a color preprocessing offset of each feature area for a reversed image of the green image corresponding to the image seen at the observation point, and $(\Delta x_{p,q}, \Delta y_{p,q})_{B,i,j,k}$ represents a color preprocessing offset of each feature area for a reversed image of the blue image corresponding to the image seen at the observation point.

It can be understood that the observation point may be any observation point within an eye box; and color preprocessing offsets corresponding to each observation point, and color preprocessing offsets that are of each reversed feature area and that correspond to each observation point may be obtained by using the foregoing method.

Finally, the foregoing two kinds of offsets may be merged, and the foregoing process is repeated within the eye box, to obtain color preprocessing offsets that are of each area on the image source 100 and that correspond to the observation point $(x_i, y_j, z_k)$ as follows:

$$(\Delta x_{a,b}, \Delta y_{a,b})_{R,i,j,k}, (\Delta x_{a,b}, \Delta y_{a,b})_{G,i,j,k}, (\Delta x_{a,b}, \Delta y_{a,b})_{B,i,j,k}$$

where $a$ represents a row in which a feature area is located, b represents a column in which the feature area is located, $(\Delta x_{a,b}, \Delta y_{a,b})_{R,i,j,k}$ represents a merged color preprocessing offset of each feature area for the red image, $(\Delta x_{a,b}, \Delta y_{a,b})_{G,i,j,k}$ represents a merged color preprocessing offset of each feature area for the green image, and $(\Delta x_{a,b}, \Delta y_{a,b})_{B,i,j,k}$ represents a merged color preprocessing offset of each feature area for the blue image.

"Merging" may be understood as superposition, that is, the color preprocessing offsets of each feature area and the color preprocessing offsets of each reversed feature area are both considered, so as to reduce a color offset aberration to a maximum extent.

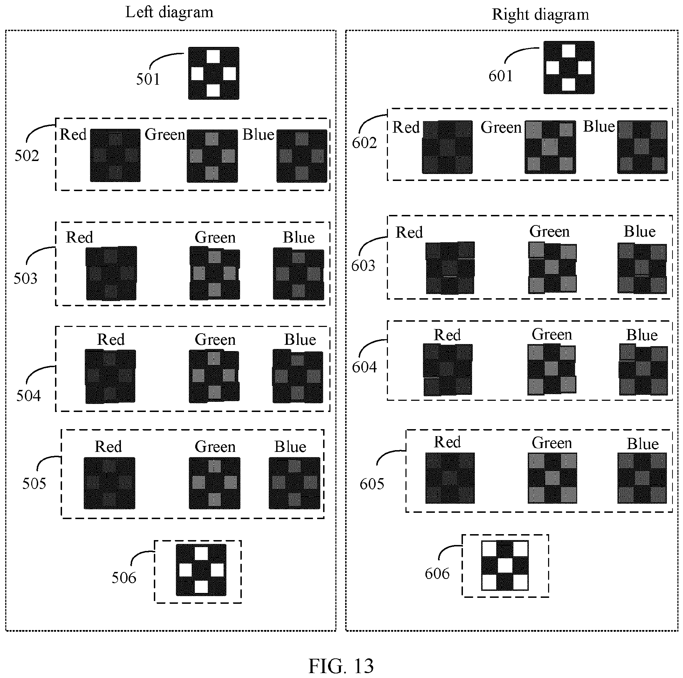

For example, as shown in a left part of FIG. 13, a process of obtaining an offset of each feature area in a monochromatic image is as follows: 501: Input a black-and-white checkerboard image to the image source 100. 502: Obtain, through decomposition, a tri-color image (or referred to as an original colored feature image) of the input feature image. 503: Record, in combination with an eye tracking technology, a tri-color image seen at an observation point. 504: Adjust an offset of each feature area in the tri-color image at the image source, or in other words, perform fitting and adjustment. 505: A tri-color image seen at the observation point is the same as the original colored feature image. 506: Record the offset of each feature area in the monochromatic image.

With reference to a right part of FIG. 13, the following describes a process of obtaining an offset of each feature area in a monochromatic image after feature reversal is performed on an image.

For another example, as shown in the right part of FIG. 13, the process of obtaining the offset of each feature area in a feature-reversed monochromatic image is as follows: 601: Input a feature-reversed black-and-white checkerboard image to the image source 100. 602: Obtain, through decomposition, a feature-reversed tri-color image (or referred to as a feature-reversed original colored feature image) of the input feature-reversed feature image. 603: Record, in combination with an eye tracking technology, a feature-reversed tri-color image seen at an observation point. 604: Adjust an offset of each feature area in the tri-color image input from the image source 100, or in other words, perform fitting and adjustment. 605: A tri-color image seen at the observation point is the same as the feature-reversed original colored feature image. 606: Record the offset of each feature area in the feature-reversed monochromatic image.

It can be understood that the description in FIG. 13 is merely an example description, and does not constitute a limitation on embodiments of this application.

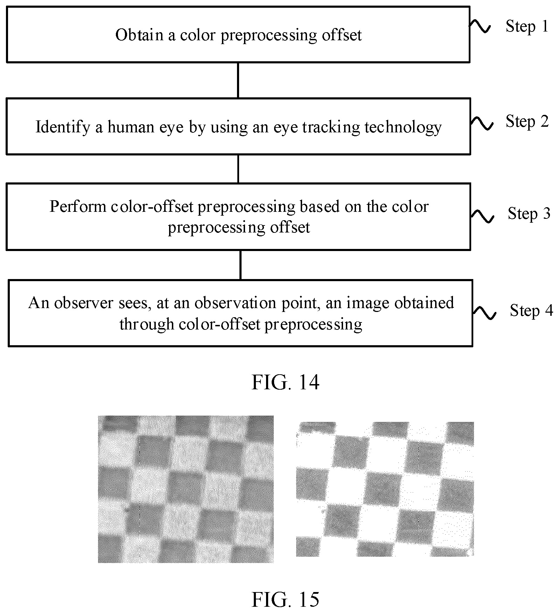

In embodiments of this application, with reference to an eye tracking technology, a position of an observation point is identified and a corresponding color preprocessing offset is invoked, to perform color-offset preprocessing at the image source 100, so that an image that has no color offset aberration and has undergone color offset correction can be obtained (or in other words, can be seen by an observer). Below is a description with reference to a procedure in FIG. 14.

Step 1: Obtain a color preprocessing offset.

For a specific process of determining the color preprocessing offset, refer to the foregoing descriptions.

A brief description is provided herein: find corresponding color preprocessing offsets of each feature area at an observation point within a designed eye box: $(\Delta x_{m,n}, \Delta y_{m,n})_{R,i,j,k}$, $(\Delta x_{m,n}, \Delta y_{m,n})_{G,i,j,k}$, and $(\Delta x_{m,n}, \Delta y_{m,n})_{B,i,j,k}$, and color preprocessing offsets of each reversed feature area: $(\Delta x_{p,q}, \Delta y_{p,q})_{R,i,j,k}$, $(\Delta x_{p,q}, \Delta y_{p,q})_{G,i,j,k}$, and $(\Delta x_{p,q}, \Delta y_{p,q})_{B,i,j,k}$; and merge the two to obtain feature offsets of the image source 100 at the observation point: $(\Delta x_{a,b}, \Delta y_{a,b})_{R,i,j,k}$, $(\Delta x_{a,b}, \Delta y_{a,b})_{G,i,j,k}$, and $(\Delta x_{a,b}, \Delta y_{a,b})_{B,i,j,k}$.

Step 2: Identify a human eye by using an eye tracking technology. For example, it may be identified that the human eye is at a position $(x_i, y_j, z_k)$.

Step 3: Perform color-offset preprocessing based on the color preprocessing offset.

Specifically, the color preprocessing offset obtained in Step 1 is invoked to perform the color-offset preprocessing.

Step 4: An observer sees, at the observation point, an image obtained through color-offset preprocessing, where a color offset aberration has been eliminated from the image obtained through color-offset preprocessing.

FIG. 15 is a comparison diagram showing an effect of color-offset preprocessing. As shown in FIG. 15, a diagram on the left shows an image that does not undergo color-offset preprocessing, and a diagram on the right shows an image that has undergone color-offset preprocessing. It can be seen that, compared with the diagram on the left, edges of feature points (that is, edges of each cell) in the diagram on the right are clearer. Therefore, in a holographic projection display system, using the color-offset preprocessing technology in embodiments of this application helps improve imaging quality.

For example, the color offset preprocessing function in embodiments of this application may be implemented in a software manner. For example, an image processing filter lens having the color-offset preprocessing function may be added to the image source 100.

This application further provides augmented reality glasses, including any one of the projection systems that can be used in the augmented reality glasses according to the foregoing embodiments.

This application further provides a vehicle, including any one of the projection systems that can be used in the vehicle according to the foregoing embodiments.

This application further provides a terminal, including any one of the projection systems according to the foregoing embodiments.

This application further provides a projection method, where the projection method is implemented by the foregoing projection system. The projection system includes: a phase compensation apparatus and a holographic combiner. The projection method includes: performing, by the phase compensation apparatus, first phase compensation and chromatic aberration correction on a light ray of a received image, and reflecting an output light ray of the image to the holographic combiner; and performing, by the holographic combiner, second phase compensation on the light ray that is of the image and that is output by the phase compensation apparatus, and deflecting the light ray of the image that has undergone the second phase compensation into a human eye, so that the light ray of the image becomes an enlarged image.

Optionally, the performing, by the holographic combiner, second phase compensation on the light ray that is of the image and that is output by the phase compensation apparatus includes: performing compensation on astigmatism of the light ray that is of the image and that is output by the phase compensation apparatus.

Optionally, the performing, by the phase compensation apparatus, first phase compensation on the light ray of the image includes: performing compensation on a spherical aberration and a coma aberration of the light ray of the image.

In embodiments of this application, "at least one" means one or more, "at least one item" means one or more items, "a plurality of" means two or more, and "a plurality of items" means two or more items. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent a; b; c; a and b; a and c; b and c; or a, b, and c, where a, b, and c each may be singular or plural.

A person of ordinary skill in the art may be aware that, illustrative steps described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it is to be understood that the disclosed systems, apparatuses, and methods may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, and may be located at one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a current technology, or some of the technical solutions may be implemented in a form of a software product. The computer software product is stored in a storage medium and includes several instructions for instructing a computer device (which may be a personal computer, a server, or a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A projection system, comprising: a phase compensation apparatus and a holographic combiner, wherein

   the phase compensation apparatus is configured to perform first phase compensation and chromatic aberration correction on a light ray of a received image, and reflect an output light ray of the image to the holographic combiner; and
   the holographic combiner is configured to perform second phase compensation on the light ray that is of the image and that is output by the phase compensation apparatus, and deflect the light ray of the image that has undergone the second phase compensation into a human eye, so that the light ray of the image becomes an enlarged image.

2. The projection system according to claim 1, wherein that the holographic combiner is configured to perform second phase compensation on the light ray that is of the image and that is output by the phase compensation apparatus comprises: performing compensation on astigmatism of the light ray that is of the image and that is output by the phase compensation apparatus.

3. The projection system according to claim 1 or 2, wherein that the phase compensation apparatus is configured to perform first phase compensation on the light ray of the image comprises: performing compensation on a spherical aberration and a coma aberration of the light ray of the image.

4. The projection system according to any one of claims 1 to 3, wherein the holographic combiner is fabricated by adding a spatial light modulator and/or a free-form curved mirror and performing holographic exposure.

5. The projection system according to any one of claims 1 to 4, wherein there is an included angle between a central projection light ray outgoing from the holographic combiner and a normal direction of the holographic combiner.

6. The projection system according to claim 4, wherein the projection system is used in an in-vehicle head-up display system;

   the holographic combiner is attached to a windshield of a vehicle, or sandwiched in the windshield; and
   the phase compensation apparatus is disposed at a central console of the vehicle.

7. The projection system according to claim 5 or 6, wherein the projection system further comprises an image source, configured to send the light ray of the image to the phase compensation apparatus;

   a value range of a cumulative optical path $d_0$ from the image source to the holographic combiner is from 200 millimeters to 600 millimeters; and
   a value range of a focal length $f_{HOEX}$ of the holographic combiner in a first direction is from 202.70 millimeters to 681.82 millimeters, and a value range of a focal length $f_{HOEY}$ of the holographic combiner in a second direction is from 200.31 millimeters to 679.03 millimeters.

8. The projection system according to any one of claims 1 to 4, wherein a central projection light ray outgoing from the holographic combiner is parallel to a normal direction of the holographic combiner.

9. The projection system according to claim 8, wherein the projection system is used in augmented reality AR glasses;

   the holographic combiner is disposed at a lens; and
   the phase compensation apparatus is disposed in a leg of the AR glasses.

10. The projection system according to claim 8 or 9, wherein the projection system further comprises an image source, configured to send the light ray of the image to the phase compensation apparatus;

    a value range of a cumulative optical path $d_0$ from the image source to the holographic combiner is from 30 millimeters to 65 millimeters; and
    a value range of a focal length $f_{HOEX}$ of the holographic combiner in a first direction is 30.36 millimeters to 2191.01 millimeters, and a value range of a focal length $f_{HOEY}$ of the holographic combiner in a second direction is from 30.18 millimeters to 69.52 millimeters.

11. The projection system according to any one of claims 1 to 10, wherein the phase compensation apparatus comprises a reflective holographic optical element.

12. The projection system according to claim 11, wherein the phase compensation apparatus further comprises at least one free-form curved mirror.

13. The projection system according to claim 11 or 12, wherein a tri-color wavelength linewidth of the light ray of the image received by the phase compensation apparatus is less than 10 nanometers.

14. The projection system according to any one of claims 1 to 10, wherein the phase compensation apparatus comprises at least one free-form curved mirror.

15. The projection system according to claim 14, wherein a tri-color wavelength linewidth of the light ray of the image received by the phase compensation apparatus is less than 3 nanometers.

16. The projection system according to any one of claims 1 to 15, wherein the projection system further comprises the image source, and the image source is further configured to perform color-offset preprocessing on the light ray of the image.

17. The projection system according to any one of claims 1 to 16, wherein the phase compensation apparatus further comprises a planar reflector.

18. Augmented reality glasses, comprising the projection system according to any one of claims 1 to 4 and 8 to 17.

19. A vehicle, comprising the projection system according to any one of claims 1 to 7 and 11 to 17.

20. A terminal, comprising the projection system according to any one of claims 1 to 17.

Holographic optical element

FIG. 1

<u>200</u>

FIG. 2

Inclined
direction

Non-inclined
direction

FIG. 3

Side view of an HUD

Virtual image

102

$d_i$

$\theta$

$d_0$

$d_c$

101

$dmx$

Coaxial equivalent 100

$d_s$

100

Intermediate image position in
the first direction

$d_s$

$dmy$

Intermediate image position in
the second direction

Second direction
(Usually a vertical direction Y)

First direction
✕ (Usually a horizontal direction X)

EP 4 328 653 A1

FIG. 4

FIG. 5

FIG. 6

Flight reminder:
Shenzhen-Beijing
ZH9101
Boarding at 7:00

Boarding gate: 62
Turn left 200m ahead

May 21, 2021
Friday
06:30

You have a VIP lounge
experience coupon of
Shenzhen Airlines Airport for
use here (50 meters ahead)

Second
direction

First
direction

102

100

101

FIG. 7

EP 4 328 653 A1

FIG. 8

FIG. 9

EP 4 328 653 A1

FIG. 10

FIG. 11

FIG. 12

Left diagram                                    Right diagram

FIG. 13

| | |
|---|---|
| Obtain a color preprocessing offset | Step 1 |
| Identify a human eye by using an eye tracking technology | Step 2 |
| Perform color-offset preprocessing based on the color preprocessing offset | Step 3 |
| An observer sees, at an observation point, an image obtained through color-offset preprocessing | Step 4 |

FIG. 14

FIG. 15

## INTERNATIONAL SEARCH REPORT

| International application No. |
| --- |
| **PCT/CN2022/090934** |

| A. | CLASSIFICATION OF SUBJECT MATTER |
| --- | --- |
| | G02B 27/01(2006.01)i |

According to International Patent Classification (IPC) or to both national classification and IPC

| B. | FIELDS SEARCHED |
| --- | --- |

Minimum documentation searched (classification system followed by classification symbols)

G02B27;

Documentation searched other than minimum documentation to the extent that such documents are included in the fields searched

Electronic data base consulted during the international search (name of data base and, where practicable, search terms used)

CNTXT, ENTXTC, ENTXT, DWPI: AR, VR, HUD, PROJECT, HOLOGRAPHIC, COMPENSAT+, ABERRAION, COLOR, 色差, 像差, 投影, 增强现实, 虚拟现实, 补偿, 全息

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109164583 A (SHENZHEN LOCHN OPTICS TECHNOLOGY CO., LTD.) 08 January 2019 (2019-01-08) <br> description, paragraph 0019-0027, and figure 1-2 | 1-4, 6, 11-20 |
| A | CN 109164583 A (SHENZHEN LOCHN OPTICS TECHNOLOGY CO., LTD.) 08 January 2019 (2019-01-08) <br> entire document | 5, 7-10 |
| A | CN 110308566 A (SHANGHAI HUIXI ELECTRONIC TECHNOLOGY CO., LTD.) 08 October 2019 (2019-10-08) <br> entire document | 1-20 |
| A | US 2021165215 A1 (SEEREAL TECHNOLOGIES S.A.) 03 June 2021 (2021-06-03) <br> entire document | 1-20 |
| A | CN 206178247 U (ZHEJIANG SHUNTONG INTELLIGENT TECHNOLOGY CO., LTD.) 17 May 2017 (2017-05-17) <br> entire document | 1-20 |
| A | EP 3317712 A1 (ESSILOR INTERNATIONAL) 09 May 2018 (2018-05-09) <br> entire document | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 June 2022** | **29 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/090934**

**C.    DOCUMENTS CONSIDERED TO BE RELEVANT**

| Category* | Citation of document, with indication, where appropriate, of the relevant passages | Relevant to claim No. |
|---|---|---|
| A | CN 109709676 A (ZHEJIANG CRYSTAL-OPTECH CO., LTD.) 03 May 2019 (2019-05-03) entire document | 1-20 |

Form PCT/ISA/210 (second sheet) (January 2015)

**INTERNATIONAL SEARCH REPORT**
Information on patent family members

International application No.

**PCT/CN2022/090934**

| Patent document cited in search report | | | Publication date (day/month/year) | Patent family member(s) | | | Publication date (day/month/year) |
|---|---|---|---|---|---|---|---|
| CN | 109164583 | A | 08 January 2019 | None | | | |
| CN | 110308566 | A | 08 October 2019 | None | | | |
| US | 2021165215 | A1 | 03 June 2021 | KR | 20200096811 | A | 13 August 2020 |
| | | | | JP | 2021505952 | A | 18 February 2021 |
| | | | | DE | 112018006228 | A5 | 03 September 2020 |
| | | | | TW | 201925856 | A | 01 July 2019 |
| | | | | CN | 111448503 | A | 24 July 2020 |
| | | | | WO | 2019110647 | A1 | 13 June 2019 |
| CN | 206178247 | U | 17 May 2017 | None | | | |
| EP | 3317712 | A1 | 09 May 2018 | JP | 2018525662 | A | 06 September 2018 |
| | | | | US | 2018203232 | A1 | 19 July 2018 |
| | | | | CN | 107924057 | A | 17 April 2018 |
| | | | | WO | 2017005608 | A1 | 12 January 2017 |
| | | | | US | 2021055563 | A1 | 25 February 2021 |
| | | | | KR | 20180045864 | A | 04 May 2018 |
| CN | 109709676 | A | 03 May 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110552755